# NEUE EUROPÄISCHE PATENTSCHRIFT

(11) **EP 2 548 685 B2**
(45) Veröffentlichungstag und Bekanntmachung des Hinweises auf die Entscheidung über den Einspruch: **27.10.2021**
(45) Hinweis auf die Patenterteilung: 24.05.2017
(21) Anmeldenummer: 12175439.4
(22) Anmeldetag: 06.07.2012
(51) Int. Cl.: B23K 1/00, B23K 35/02, B23K 35/30, B23P 6/00, C22C 19/03, C22C 19/07, F01D 5/00

(54) **Lot zum Hochtemperaturlöten und Verfahren zum Reparieren bzw. Herstellen von Bauteilen unter Verwendung dieses Lotes**
Solder for high temperature soldering and method for repairing and producing components using this solder
Lot de brasage à haute température et procédé de réparation ou de fabrication de composants en utilisant ce fil

(30) Priorität: 19.07.2011 CH 12032011
(43) Veröffentlichungstag der Anmeldung: 23.01.2013
(73) Patentinhaber: Ansaldo Energia IP UK Limited, London W1G 9DQ (GB)
(72) Erfinder: Stankowski, Alexander, 5303 Würenlingen (CH); Beckel, Daniel, 5430 Wettingen (CH)
(74) Vertreter: Bernotti, Andrea

(56) Entgegenhaltungen:
- EP-A1- 1 967 313
- DE-A1-102009 051 823
- JP-A- 2010 036 199
- US-A1- 2008 142 575
- US-B1- 6 348 081

## Beschreibung

### Technisches Gebiet

Die Erfindung bezieht sich auf das Gebiet der Werkstofftechnik. Sie betrifft ein spezielles Lot zum Hochtemperaturlöten gemäß dem Oberbegriff des Anspruchs 1 (siehe, z.B., US2008/142575 A1), und ein Verfahren zum Reparieren von aus einkristallinen oder gerichtet erstarrten Superlegierungen bestehenden geschädigten Bauteilen, insbesondere Gasturbinenschaufeln, unter Verwendung dieses Lotes, siehe Anspruch 8. Die Erfindung betrifft auch ein Verfahren zum Verbinden mindestens zweier Bauteilelemente aus einkristallinen oder gerichtet erstarrten Superlegierungen zwecks Herstellung bzw. Reparatur von Bauteilen unter Verwendung des erfindungsgemässen Lotes, siehe Ansprüche 9-10.

### Stand der Technik

Einkristalline oder gerichtet erstarrte Komponenten aus Superlegierungen, beispielsweise Nickel-Basis, Kobalt-Basis- oder Nickel-Kobalt-Basis Superlegierungen, weisen bei sehr hohen Beanspruchungstemperaturen u.a. eine gute Materialfestigkeit, aber auch eine gute Korrosionsbeständigkeit und eine gute Oxidationsbeständigkeit sowie eine gute Zeitstandfestigkeit auf. Aufgrund dieser Eigenschaftskombination kann beim Einsatz derartiger, allerdings sehr teurer Werkstoffe, z. B. in Gasturbinen, die Einlasstemperatur der Turbine stark erhöht werden, wodurch der Wirkungsgrad der Anlage steigt. Betriebstemperaturen im Heissgasbereich von über 1400 °C sind daher Beanspruchungstemperaturen, denen eine Vielzahl von Bauteilen der Gasturbine, z. B. Leit- und Laufschaufeln oder Brennkammerauskleidungen ausgesetzt sind. Neben diesen hohen thermischen Beanspruchungen werden beispielsweise vor allem Turbinenlaufschaufeln auch mechanisch stark beansprucht. Dies alles kann während des Betriebes der Turbine zur Entstehung unerwünschter Risse im Material führen, so dass derartig geschädigte Bauteile entweder durch Neuteile ersetzt oder aber repariert werden müssen.

Da die Herstellung einkristalliner bzw. gerichtet erstarrter neuer Turbinenbauteile aber wie bereits oben erwähnt extrem kostspielig und bei grossen Teilen bezüglich einer ausreichenden Materialqualität (durchgängige einkristalline bzw. gerichtet erstarrte Struktur) kompliziert ist, versucht man meist, das vorhandene geschädigte Bauteil zu reparieren, d.h. die Funktionsfähigkeit des Bauteils soll durch die Reparatur wieder hergestellt und das reparierte Bauteil dann erneut für eine weitere Revisionsperiode in der Turbine eingesetzt werden.

Die Reparatur von einkristallinen oder gerichtet erstarrten geschädigten Gasturbinenbauteilen ist aber im Vergleich zur Reparatur von geschädigten Bauteilen, die ein herkömmliches polykristallines Gefüge aufweisen, wesentlich schwieriger, da auch die reparierten Bereiche der einkristallinen bzw. gerichtet erstarrten Bauteile eine entsprechende einkristalline beziehungsweise gerichtet erstarrte Mikrostruktur aufweisen sollten, anderenfalls kommt es zu einer unerwünschten Verschlechterung der Eigenschaften im reparierten Bereich.

Es ist bekannter Stand der Technik (siehe z. B. EP 1 258 545 B1), dass zur Reparatur geschädigter Gasturbinenbauteile beispielsweise ein Lötprozess eingesetzt wird. Dabei wird ein Lot im Bereich der Materialschädigung des Bauteils, z. B. im Bereich eines Risses, auf das Grundmaterial aufgebracht und in den Riss eingefüllt, sowie anschliessend mittels einer Wärmeeinwirkung (Behandlungstemperatur muss grösser sein als die Schmelztemperatur des Lotes, aber kleiner als die Schmelztemperatur des Grundwerkstoffes) aufgeschmolzen und mit dem Grundmaterial stoffschlüssig verbunden. Zur Absenkung der Schmelztemperatur des Lotes werden diesem meist schmelzpunkterniedrigende Elemente, im Falle der EP 1 258 545 B1 sind dies 1-3 Gew. -% B, zugegeben.

Das Lötverfahren hat gegenüber den ebenfalls bekannten, hier aber nicht näher beschriebenen Schweissverfahren zur Reparatur geschädigter Gasturbinenbauteile den Vorteil, dass beim Löten das Grundmaterial nicht aufgeschmolzen wird und daher die einkristalline Struktur des Grundmaterials erhalten bleiben kann.

Während der Wärmebehandlung beim Löten finden Diffusionsprozesse im Material statt, die u.a. dazu führen, dass die Schmelzpunkterniedriger, wie Bor, aus dem Lot in das umgebende Grundmaterial diffundieren. Das Lot erstarrt infolge der Absenkung der Bor-Konzentration, während das Grundmaterial im das Lot umgebenden Bereich eine erhöhte Bor-Konzentration aufweist, was nachteilig zur Ausscheidung spröder Boride führen kann.

Weiterhin kann auch nachteilig das Lotmaterial im Gegensatz zum Grundmaterial in vielen Fällen nach dem Löten aufgrund der grossen Wärmeeinwirkung keine einkristalline bzw. gerichtet erstarrte Struktur aufweisen. Dies ist u.a. darauf zurückzuführen, dass die für Gasturbinenkomponenten verwendeten hochtemperaturbeständigen Superlegierungen auch bei sehr hohen Temperaturen gelötet werden müssen. In Abhängigkeit von der Höhe der Eigenspannungen innerhalb des zu reparierenden Gebietes, beispielsweise eines Risses, ist dann die Rekristallisationswahrscheinlichkeit entlang der Rissoberfläche sehr hoch. Dies trifft besonders auf die Oberflächen zu, die während des Vorbereitungsprozesses vor dem Lötzyklus einer mechanischen Bearbeitung, wie beispielsweise einem Abschleifen, Sandstrahlen oder Kugelstrahlen, ausgesetzt sind.

Durch Rekristallisation kommt es zur Neubildung von Körnern im Grundmaterial, d.h. einerseits kann eine einkristalline bzw. gerichtet erstarrte Struktur im Grundmaterial nicht mehr gewährleistet werden und andererseits sind die neu gebildeten Korngrenzen nicht stabil. Ebenso erstarrt das Lotmaterial in ungeordneter polykristalliner Struktur und weist somit nachteilig schlechtere Eigenschaften auf als das einkristalline bzw. gerichtet erstarrte Grundmaterial.

Eine polykristalline Struktur im Lotmaterial und Rekristallisation im Grundmaterial können nur verhindert werden, wenn es gelingt, die Löttemperatur tief genug unterhalb eines kritischen Wertes zu halten.

Aus EP 1 759 806 A1 und aus US 2004/0050913 A1 ist bekannt, durch Verringerung der Partikelgrösse (auf Werte im Nanometerbereich) einer Lotlegierung, die in einer Trägerflüssigkeit suspendiert ist, den Schmelzpunkt des Lotes zu senken, allerdings wird das mit dem Ziel gemacht, den Anteil an schmelzpunkterniedrigenden Elementen, z. B. B und Si, in der Lötlegierung zu senken bzw. diese Elemente gänzlich aus der Lotlegierung zu entfernen, da sie nachteilig für die Bildung von spröden Phasen verantwortlich sind, die u.a. einen ungewollten Duktilitätsverlust des Materials verursachen.

Der Effekt, der mit der Verwendung von Lotpulver im Nanometergrössenbereich erreicht wird, wird hier also ausgenutzt, um die Schmelzpunkterniedriger im Material zu ersetzen. Die Absenkung des Schmelzpunktes der Teilchen im Nanometergrössenbereich wird mit der niedrigen Aktivierungsenergie zum Freisetzen von Atomen auf der Oberfläche eines Teilchens in Nanogrösse im Vergleich mit einem grösseren Teilchen erklärt. Ausserdem schmelzen Nanoteilchen schneller als Pulverteilchen im Mikrometerbereich, da sie ein sehr grosses Oberflächen/Volumen-Verhältnis aufweisen. Nachteilig an dieser technischen Lösung ist, dass aufgrund der alleinigen Verwendung von Nanopartikeln als fester Lotbestandteil der Suspension ein starker Schrumpfungsschwund nach dem Löten auftritt und somit die Qualität der Lötstelle verbesserungsbedürftig ist.

Als weitere Möglichkeit zur zusätzlichen Senkung der Schmelztemperatur der Nanoteilchen bei der Reparatur von einkristallinen Bauteilen aus Superlegierungen mittels Löten wird in EP 1 759 806 A1 auch die Möglichkeit angegeben, Schmelzpunkterniedriger, insbesondere Bor, direkt zur Lötsuspension zuzugeben.

Aus US 2004/0050913 A1 ist ausserdem ein Lotmaterial zum Diffusionslöten bekannt, welches aus einer Pulvermischung aus Füllmaterialpartikeln im Nanometergrössenbereich (vorzugsweise zwischen 10 und 100 nm) und aus Pulverteilchen im Mikrometergrössenbereich (vorzugsweise zwischen 45 und 100 µm) in einer Trägersuspension besteht. Wie bereits oben erläutert, schmelzen die Nanopartikel bei einer Temperatur, die deutlich unter der Schmelztemperatur von Partikeln mit einer Korngrösse im Mikrometer-Bereich liegt, so dass in der genannten Druckschrift ausdrücklich wieder darauf hingewiesen wird, dass nun vorteilhaft die Zugabe von schmelzpunkterniedrigenden Elementen, wie B oder Si, zur Lotlegierung deutlich verringert bzw. völlig auf eine Zugabe von schmelzpunkterniedrigenden Elementen verzichtet werden kann und damit die negativen Wirkungen der schmelzpunkterniedrigenden Elemente auf die resultierenden Eigenschaften der Lotverbindung minimiert bzw. gänzlich beseitigt werten. Durch Reduzierung des Anteils an schmelzpunkterniedrigenden Elementen wird zudem auch der Anteil an zusätzlichen korngrenzenstabilisierenden Elementen, wie B, C, Hf, Re und Zr, in der Lotlegierung gesenkt.

In US 2004/0050913 A1 wird auch beschrieben, dass die Nanopartikel des Lotes auf ihrer Oberfläche optional mit einer ganz dünnen Schicht schmelzpunkterniedrigender Elemente, wie B oder Si, beschichtet sein können, wobei insgesamt der Anteil an schmelzpunkterniedrigenden Elementen im Lot aber immer noch wesentlich niedriger ist im Vergleich zum Anteil gemäss bekanntem Stand der Technik, was als Vorteil im genannten Dokument herausgestellt wird.

Weiterhin ist aus EP 1 930 116 A2 ein Verfahren zum Reparieren eines metallischen Bauteiles, welches einen Riss aufweist, bekannt. Bei diesem Verfahren wird zunächst eine Nanoteilchenlegierung in Form eines Pulvers, einer Folie, einer Suspension oder einer Paste in den Riss gefüllt, darüber eine Fülllegierung, die dem Grundwerkstoff zumindest ähnlich ist und eine Partikelgrösse im Mikrometerbereich aufweist, aufgebracht und anschliessend einem üblichen Diffusionslötprozess unterzogen. Die Nanoteilchen bestehen vorzugsweise aus einer Ni-, Co- oder NiCo-Basislegierung, welche bevorzugt zusätzlich mindestens ein Metall aufweist aus der Gruppe von Ti, Cr, Nb, Hf, Ta, Mo, W, Al, Fe. Durch Verwendung dieser Materialien lassen sich grosse Risse bei relativ niedrigen Löttemperaturen reparieren, wobei als Vorteil hier ebenfalls beschrieben wird, dass der Gehalt an schmelztemperaturerniedrigenden Elementen abgesenkt werden kann und dadurch die mechanischen Eigenschaften der metallischen Komponente erhalten bleiben. Nachteilig an dieser technischen Lösung ist, dass aufgrund der alleinigen Verwendung von Nanopartikeln im Riss ein starker Schrumpfungsschwund nach dem Löten auftritt und somit die Qualität der Lötstelle verbesserungsbedürftig sein dürfte.

Schliesslich wird im Dokument EP 1 967 313 A1 ein Lot zum Reparieren von Turbinenbauteilen beschrieben, das ebenfalls zwei Pulverbestandteile aufweist, wobei der erste Bestandteil ein Pulver mit Korngrössen im Mikrometerbereich (0.7-100 µm) und der zweite Bestandteil ein Pulver mit Korngrössen im Nanometerbereich (kleiner gleich 500 nm) darstellt. Gemäss einer Ausführungsvariante weist der erste Bestandteil des Lotes, d.h. das Pulver mit einer Korngrösse im Mikrometerbereich, welches bevorzugt eine Legierung ist, einen Schmelzpunkterniedriger auf, und zwar insbesondere nur einen Schmelzpunkterniedriger aus der folgenden Gruppe: C, B, Hf, Si, Zr, Ti, Ta. Über den mengenmässigen Anteil des Schmelzpunkterniedrigers an der Zusammensetzung des ersten Pulvers werden im genannten Dokument keine Aussagen gemacht. Das Lot kann in Form einer Paste, eines Schlickers, in reiner Pulverform oder mittels einer Folie auf bzw. in die geschädigte Stelle gebracht werden. Der Unterschied in der Schmelztemperatur des Lotes zur Schmelztemperatur des Grundwerkstoffes soll möglichst gross sein, mindestens 70 °C.

In WO2008/095531 A1 werden eine Lotzusammensetzung und ein Hartlötverfahren für Superlegierungen beschrieben. Die Lotzusammensetzung weist keine Schmelzpunkterniedriger auf, sondern besteht aus einem Grundwerkstoff, vorzugsweise Nickel (oder auch MCrAlX), und wenigstens einer Ausgangsphase, vorzugsweise Aluminium. Es wird nun eine zweifache Wärmebehandlung durchgeführt, wobei die erste Wärmebehandlung bei einer Temperatur durchgeführt wird, bei der die Ausgangsphase (kleinere Al-Partikel) schmilzt, der Grundwerkstoff (Ni) aber noch nicht. Die Ausgangsphase umgibt dann vollständig die grösseren Ni-Partikel. Die zweite Wärmebehandlung wird dann oberhalb einer Temperatur durchgeführt, bei der sich wenigstens eine resultierende Phase, hier Nickelaluminid, bildet, deren Solidustemperatur höher ist als die Solidustemperatur der Ausgangsphase. Wenn die resultierende Phase nach der zweiten Wärmebehandlung mechanische Eigenschaften aufweist, die den mechanischen Eigenschaften des Basismaterials nahe kommen, kann eine zuverlässige Fügung wie z. B. Verschliessen eines Risses, herbeigeführt werden. Hier können also nur eng begrenzte spezifische Lotzusammensetzungen, die zudem sehr vom Al-Gehalt abhängen, verwendet werden.

Aus US 2008/142575 A1 ist ein Lotpulver zum Hochtemperaturlöten bekannt, welches aus einem ersten metallischen Pulverbestandteil mit Korngrössen im Nanometerbereich und einen zweiten metallischen Pulverbestandteil mit Korngrössen im Mikrometerbereich besteht, wobei die Partikel des zweiten Pulverbestandteils auf ihrer Oberfläche mit Partikeln des ersten Pulverbestandteils beschichtet bzw. diese Partikel in der Oberflächenschicht eingebettet sind. Die Nano-Partikel bestehen aus Material, welches schmelzpunkterniedrigend ist. Da Schmelzpunkterniedriger oft spröde Phasen bilden, wird es im genannten Dokument als vorteilhaft herausgestellt, dass der Gehalt an Schmelzpunkterniedrigern im Vergleich zu konventionellen Lotlegierungen niedriger ist.

In DE 10 2009 051823 A1 ist ein einkristallines Schweissen von direktional verfestigten Werkstoffen beschrieben und in US 6 348 081 ein Granulattpulver für gesinterte Körper.

### Darstellung der Erfindung

Ziel der Erfindung ist es, die genannten Nachteile des Standes der Technik zu vermeiden. Der Erfindung liegt die Aufgabe zu Grunde, ein gegenüber einem aus dem Stand der Technik bekannten Lot verbessertes Lot zum Hochtemperaturlöten und ein verbessertes Verfahren zum Reparieren von aus einkristallinen oder gerichtet erstarrten Superlegierungen bestehenden Bauteilen, insbesondere Gasturbinenschaufeln, unter Verwendung dieses Lotes, zu schaffen. Es ist auch eine Aufgabe der Erfindung, ein Verfahren zum Verbinden mindestens zweier Bauteilelemente zur Herstellung oder Reparatur von aus einkristallinen oder gerichtet erstarrten Superlegierungen bestehenden modular gebauten Bauteilen unter Verwendung des erfindungsgemässen Lotes anzugeben. Ebenso ist es eine Aufgabe der Erfindung, ein Ersatzstücks aus einkristalliner oder gerichtet erstarrter Superlegierung in ein beschädigtes Bauteil aus einkristalliner oder gerichtet erstarrter Superlegierung zu fügen. Das stoffschlüssige metallische Fügen soll bei niedrigeren Löttemperaturen stattfinden und eine Rekristallisation soll sicher unterbunden werden.

Erfindungsgemäss wird dies bei einem Lot auf Ni-, Co- oder Ni-Co-Basis mit einem ersten metallischen Pulverbestandteil mit Korngrössen im Nanometerbereich und einem zweiten metallischen Pulverbestandteil mit Korngrössen im Mikrometerbereich gemäss Oberbegriff des Patentanspruches 1 dadurch erreicht, dass das schmelzpunkterniedrigende Element Bor enthält, und wobei der Gehalt an Bor 3 bis 7 Gew.-% beträgt.

Mit dem erfindungsgemässen Lot wird vorteilhaft aufgrund der Nanogrösse der Partikel die Schmelztemperatur stark herabgesetzt und dadurch gleichzeitig die Rekristallisationswahrscheinlichkeit im angrenzenden Grundmaterial reduziert, so dass es sich hervorragend zum Löten von einkristallinen bzw. gerichtet erstarrten Komponenten einsetzen lässt. Sollte sich doch einmal eine lokale Rekristallisation im Grundmaterial während des Lötens nicht vermeiden lassen, so findet aufgrund der vorhandenen korngrenzenstabilisierenden Elemente sehr effizient eine Verfestigung der Korngrenzen statt. Das Fliessverhalten des Lotes ist sehr gut. Dadurch ist sichergestellt, dass beispielsweise zu reparierende Risse optimal mit dem Lot gefüllt werden.

Der erhöhte Gehalt an schmelzpunkterniedrigendem Bor mit 3 bis 7 Gew.- % bewirkt, dass sich die bekannte Wirkung der geringeren Korngrösse der Pulverteilchen auf die Absenkung der Schmelztemperatur und die Wirkung der Schmelzpunkterniedriger verstärken.

Erfindungsgemäss wird die Aufgabe bei einem Verfahren zum Reparieren von aus einkristallinen oder gerichtet erstarrten Superlegierungen auf Nickel-, Kobalt- oder Nickel-Kobalt-Basis bestehenden mit mindestens einem Kapillarriss geschädigten Bauteilen, insbesondere Gasturbinenschaufeln, dadurch erreicht, dass ein erfindungsgemässes Lot ohne Füllerpartikel verwendet wird, welches in den Riss eingebracht wird, dann das Lot mittels einer einfachen Wärmebehandlung aufgeschmolzen und abgekühlt wird, so dass eine stoffschlüssige Verbindung des Lotes mit dem umgebenden Grundmaterial des Bauteiles erzeugt wird, wobei das erstarrte Lot dieselbe einkristalline bzw. gerichtete Mikrostruktur wie das umgebende Grundmaterial aufweist.

Von Vorteil ist einerseits der einfache Lötprozess (Wärmebehandlung ohne Zwischenabkühlung(en) auf Raumtemperatur), andererseits die relativ niedrige Löttemperatur aufgrund der niedrigen Schmelztemperatur des Lotes. Es gibt nur ein geringes Rekristallisationsrisiko. Das Lot kann je nach Einsatzfall als Pulver, als Suspension oder als Paste aufgebracht werden. Aufgrund der Partikelgrösse im Nanometerbereich können kleine kapillarähnliche Risse (≤120 µm) hervorragend repariert werden. Dies passt besonders gut auf einkristalline bzw. gerichtet erstarrte Materialien von Gasturbinenkomponenten, weil dort typischerweise Risse mit Breiten von nur wenigen Mikrometern, aber in Abhängigkeit von den Betriebsbedingungen mit einigen Millimetern Länge auftreten.

Werden breitere Risse (z. B. 250 µm Rissbreite) gelötet, so gibt es kaum Schrumpfungen, weil kein reines Nanolot verwendet wird. Mehrfache Lötanwendungen mit entsprechenden mehrfachen Wärmebehandlungen sind nicht notwendig. Mit der Erfindung ist es möglich, Reparaturen von Schaufeln thermischer Turbomaschinen auf höher beanspruchte Gebiete auszudehnen mit einem minimalen Rekristallisationsrisiko.

Erfindungsgemäss wird die Aufgabe der Erfindung bei einem Verfahren zum Herstellen oder zur Reparatur modular gebauter Bauteile, insbesondere Gasturbinenschaufeln, welche aus mindestens zwei Bauteilelementen aus einkristallinen oder gerichtet erstarrten Superlegierungen auf Nickel-, Kobalt- oder Nickel-Kobalt-Basis bestehen, und die Bauteilelemente einander gegenüberliegende zu verbindende Oberflächen aufweisen, dadurch erreicht, dass ein erfindungsgemässes Lot ohne Füllerpartikel verwendet wird, welches nach einer üblichen vorgängigen mechanischen Vorbereitung der zu verbindenden Oberflächen vorzugsweise in Form einer Paste, auf mindestens eine der Oberflächen aufgebracht wird, anschliessend die zu verbindenden Oberflächen der Bauteilelemente passgenau aufeinandergefügt und auf Kapillarspaltbreite zusammengepresst werden, und dann das Lot mittels einer einfachen, d.h. ohne zwischenzeitliche Abkühlung auf Raumtemperatur (RT), Wärmebehandlung aufgeschmolzen und auf RT abgekühlt wird, so dass eine stoffschlüssige Verbindung des Lotes mit den Oberflächen der Bauteilelemente erzeugt wird, wobei das erstarrte Lot dieselbe einkristalline bzw. gerichtete Mikrostruktur wie das umgebende Grundmaterial aufweist.

Ebenso lässt sich ein Ersatzstück aus einkristalliner oder gerichtet erstarrter Superlegierung in ein beschädigtes Bauteil aus einkristalliner oder gerichtet erstarrter Superlegierung fügen.

Auch hier ist es von besonderem Interesse, dass einerseits nur ein einfacher Lötprozess nötig ist, und andererseits die Löttemperatur aufgrund der niedrigen Schmelztemperatur des Lotes relativ niedrig ist. Es gibt nur ein geringes Rekristallisationsrisiko. Aufgrund der Partikelgrösse im Nanometerbereich können Artikel mit kleinen Abständen/Lücken (≤ 120 µm) verbunden werden.

Bei Verwendung von grossen Füllerpartikeln und/oder höheren Anteilen der Füllerpartikeln im Lot sind aber auch grössere Abstände zwischen den Bauteilelementen problemlos zu löten, allerdings dann ohne Ausbildung einer epitaktischen Mikrostruktur.

In einer Ausführungsvariante kann das Lot zusätzlich Füllerpartikel enthalten mit einer Korngrösse im Bereich von 1-30 µm und einem Anteil an der Gesamtmischung von 1 bis 40 Gew.- % aufweist. Vorzugsweise liegt die Korngrösse der Füllerpartikel im Bereich von 1 bis 15 µm und der Anteil der Füllerpartikel an der Gesamtmischung beträgt 5 bis 20 Gew.- %. Dann können besonders vorteilhaft breitere Risse gelötet werden und ausserdem ist es je nach Art und Anteil des eingesetzten Follermaterials möglich, die Eigenschaften des gelöteten Bereiches zu beeinflussen. Allerdings weist dann das erstarrte Lot nicht zwingend dieselbe einkristalline bzw. gerichtet erstarrte Mikrostruktur auf wie das umgebende Grundmaterial.

In einer Ausführungsform können auch die Füllerpartikel an ihrer Oberfläche mit Partikeln des ersten Pulverbestandteils dünn beschichtet sein. Die Beschichtung der Partikel des zweiten Pulverbestandteils und die Beschichtung der Füllerpartikel mit den Partikeln des ersten Pulverbestandteils sind besonders vorteilhaft, wenn sie nur eine Lage bis max. 10 Lagen der Partikel des ersten Pulverbestandteils umfasst, weil sie dann sehr leicht anschmelzen.

### Kurze Beschreibung der Zeichnungen

In der Zeichnung ist ein Ausführungsbeispiel der Erfindung dargestellt. Es zeigen schematisch:
- Fig. 1: ein geschädigtes Gebiet einer Turbinenschaufel nach Reparatur gemäss dem Stand der Technik:
- Fig. 2: ein geschädigtes Gebiet einer Turbinenschaufel nach Reparatur gemäss vorliegender Erfindung;
- Fig. 3: ein erfindungsgemässes Lot in einer ersten Ausführungsvariante;
- Fig. 4: ein erfindungsgemässes Lot in einer zweiten Ausführungsvariante;
- Fig. 5: eine modular gebaute Turbinenschaufel gemäss Erfindung und
- Fig. 6: eine Turbinenschaufel mit einem erfindungsgemäss gelöteten Einsatzstück.

### Wege zur Ausführung der Erfindung

Nachfolgend wird die Erfindung anhand von Ausführungsbeispielen und der Zeichnungen näher erläutert.

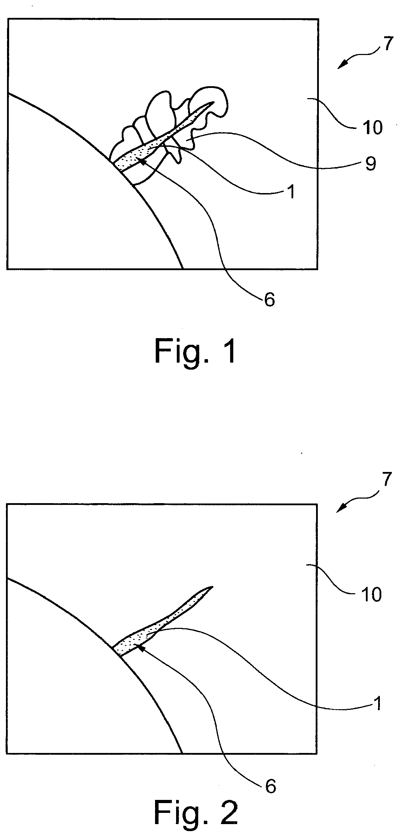

Fig. 1 zeigt schematisch ein geschädigtes Gebiet 6, hier einen Riss, eines Bauteiles 7 nach einem herkömmlichen Reparatur-Lötverfahren, Das Bauteil 7 ist im vorliegenden Falle eine Gasturbinenschaufel aus einem einkristallinen Grundmaterial 10, und zwar beispielsweise CMSX4 (10 Gew.- % Co, 6.5 Gew.- % Cr, 6.5 Gew.- % Ta, 6 Gew.- % W, 5.6 Gew.- % Al, 2.9 Gew.- % Re, 1 Gew.- % Ti, 0.6 Gew.- % Mo, 0.1 Gew.- % Hf, Rest Ni). Der Riss 6 wurde mit einem herkömmlichen Lot 1 (18.5 Gew.- % Cr, 18 Gew.- % Fe, 5 Gew.- % (Nb+Ta), 3 Gew.- % Mo, 2.5 Gew.- % B, 1 Gew.- % Ti, Rest Ni; Korngrösse zwischen 44 und 125 µm) repariert. Deutlich zu erkennen ist das Rekristallisationsgebiet 9 um den Riss 6 herum, dort liegt kein einkristallines Gefüge mehr im Grundmaterial 10 vor, d.h. hier weichen die Eigenschaften des Grundmaterials 10 deutlich von den hohen Anforderungen ab.

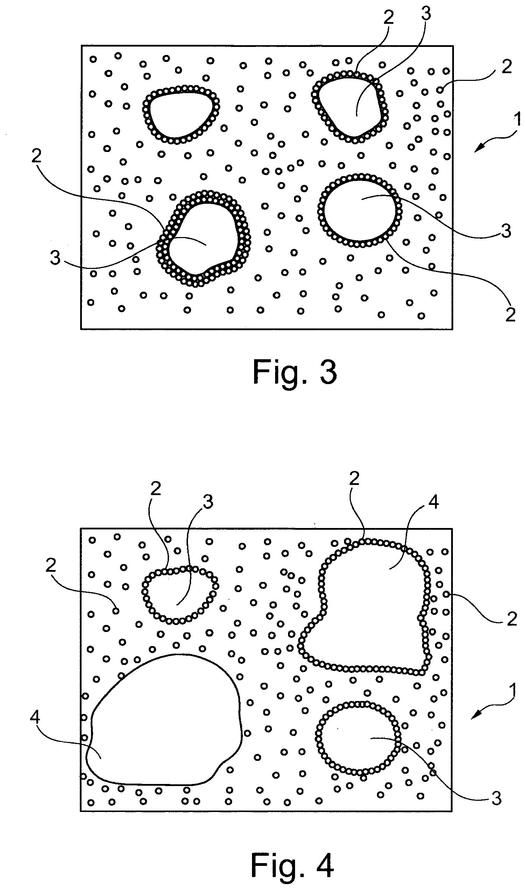

Fig. 2 zeigt schematisch das geschädigte Gebiet 6 (Riss) des Bauteiles 7 nach dem erfindungsgemässen Reparatur-Lötverfahren. Deutlich ist im Vergleich zu Fig. 1 zu sehen, dass das rekristallisierte Gebiet um den Riss 6 herum im Grundmaterial 10 fehlt, d.h. das Grundmaterial 10 ist auch nach der Reparatur, also nach dem Zulöten des Risses 6, einkristallin. Weshalb das so ist wird im Zusammenhang mit Fig. 3 erklärt.

In Fig. 3 ist schematisch das erfindungsgemässe Lot 1 in einer ersten Ausführungsvariante dargestellt. Das Lot 1 hat eine chemische Zusammensetzung auf Ni-Basis, auf Co-Basis oder Ni-Co-Basis und ist zum Hochtemperaturlöten geeignet. Es weist einen ersten metallischen Pulverbestandteil 2 mit Korngrössen im Nanometerbereich und einen zweiten metallischen Pulverbestandteil 3 mit Korngrössen im Mikrometerbereich auf. Im Sinne der vorliegenden Erfindung ist hier metallisch mit Legierung (Ni-Basis, Co-Basis bzw. Ni-Co-Basis) gleichzusetzen. Das erfindungsgemässe Lot 1 zeichnet sich dadurch aus, dass die Partikel des zweiten Pulverbestandteils 3 auf ihrer Oberfläche mit Partikeln des ersten Pulverbestandteils 2 dünn beschichtet sind, und dass das Lot 1, d.h. beide Pulverbestandteile 2 und 3, zusätzlich korngrenzenstabilisierende Elemente, beispielsweise B, C, Hf, Re, Zr als Legierungselemente aufweisen und 3-7 Gew.-% Bor als Schmelzpunkterniedriger vorhanden sind. Konkret wurde in diesem Ausführungsbeispiel folgende Zusammensetzung für das erfindungsgemässe Lot 1 verwendet: 15 Gew.- % Cr, 10 Gew.- % Co, 5.5 Gew.- % Al, 3 Gew.- % Ta, 3 Gew.- % B, 0.15 Gew.- % Y, Rest Ni. Der erste metallische Pulverbestandteil 2 lag in diesem Fall im Korngrössenbereich von 20-50 nm vor, während der zweite metallische Pulverbestandteil 3 im Korngrössenbereich von 10-25 µm vorlag.

Mit dem erfindungsgemässen Lot 1 wird nun vorteilhaft aufgrund der Nanometergrösse der Partikel die Schmelztemperatur stark herabgesetzt und dadurch gleichzeitig die Rekristallisationswahrscheinlichkeit reduziert, so dass es sich hervorragend zum Löten von einkristallinen bzw. gerichtet erstarrten Komponenten einsetzen lässt. Sollte sich doch einmal eine lokale Rekristallisation im Grundmaterial 10 während des Lötens nicht vermeiden lassen, so findet aufgrund der vorhandenen korngrenzenstabilisierenden Elemente sehr effizient eine Verfestigung der Korngrenzen statt. Das Fliessverhalten des Lotes 1 ist sehr gut, dadurch werden auch sehr enge Kapillarrisse optimal mit dem Lot gefüllt.

Selbstverständlich ist das erfindungsgemässe Lot auch zum Hochtemperaturlöten von konventionell gegossenen Komponenten einsetzbar.

Der erste und/oder zweite metallische Pulverbestandteil 2, 3 des Lotes 1 können zusätzlich mindestens ein schmelzpunkterniedrigendes Element aufweisen mit einem Gehalt, welcher mindestens so hoch ist wie in üblichen kommerziell verfügbaren Lotzusammensetzungen, vorzugsweise bis etwa doppelt so hoch. Gemäß der Erfindung ist der Anteil ca. 3 bis 7 Gew.- % B.

Dann verstärken sich vorteilhaft die Wirkung der geringeren Korngrösse der Pulverteilchen auf die Absenkung der Schmelztemperatur und die Wirkung der Schmelzpunkterniedriger.

In Fig. 4 ist schematisch das erfindungsgemässe Lot 1 in einer weiteren Ausführungsvariante dargestellt. Im Vergleich zu der in Fig. 3 dargestellten Variante sind hier zusätzlich Füllerpartikel 4, welche aus dem Grundmaterial 10 bzw. aus Derivaten des Grundmaterials bestehen, im Lot 1 enthalten. Diese Füllerpartikel 4 haben vorzugsweise eine Korngrösse im Bereich von 1-30 µm und einem Anteil an der Gesamtmischung von 1 bis 40 Gew.- %. Vorteilhaft liegt die Korngrösse der Füllerpartikel 4 im Bereich von 1 bis 15 µm und der Anteil der Füllerpartikel 4 an der Gesamtmischung beträgt 5 bis 20 Gew.- %. Damit können besonders breitere Risse 6 gelötet werden und ausserdem ist es je nach Art und Anteil des eingesetzten Füllermaterials möglich, die Eigenschaften des gelöteten Bereiches zu beeinflussen. Allerdings ist dann aufgrund der vorhandenen grossen Füllerpartikel 4 damit zu rechnen, dass das Lot 1 nicht mehr einkristallin bzw. gerichtet erstarrt wie das umgebende Grundmaterial.

Die Füllerpartikel 4 können auch zusätzlich auf ihrer Oberfläche mit Partikeln des ersten Pulverbestandteils 2 dünn beschichtet sein (siehe Fig. 4, rechts oben). Die Beschichtung der Partikel des zweiten Pulverbestandteils 3 und die Beschichtung der Füllerpartikel 4 mit den Partikeln des ersten Pulverbestandteils 2 sind besonders vorteilhaft, wenn sie nur eine Lage bis max. 10 Lagen der Partikel des ersten Pulverbestandteils 2 umfasst, weil diese dann sehr leicht anschmelzen.

Wenn beispielsweise in einem bevorzugten Ausführungsbeispiel eine Gasturbinenschaufel (Bauteil 7) aus einer einkristallinen Ni-Basis-Superlegierungen infolge eines während des Betriebes entstandenen Kapillarrisses (geschädigtes Gebiet 6) geschädigt ist und repariert werden muss, so wird zur Reparatur des geschädigten Bauteiles 7 das erfindungsgemässe Lot 1 (ohne Füllerpartikel 4) verwendet. Das Lot 1 wird nach einer vorgängigen üblichen Reinigung des geschädigten Gebietes 6 in den Kapillarriss eingebracht, dann wird es mittels einer einfachen Wärmebehandlung (d.h. ohne Zwischenabkühlungen auf RT), die in mehreren Stufen verläuft, aufgeschmolzen und schliesslich auf RT abgekühlt, so dass eine stoffschlüssige Verbindung des Lotes 1 mit dem umgebenden Grundmaterial 10 des Bauteiles 7 erzeugt wird, wobei das erstarrte Lot 1 dieselbe einkristalline bzw. gerichtete Mikrostruktur wie das umgebende Grundmaterial 10 aufweist. Die hierbei verwendete Wärmebehandlung (im Vakuumofen) sei beispielhaft für die der Erfindung zugrunde liegende Idee genannt: Die Heizrate betrug 10-15 °C / min, bei 400 °C wurde die Temperatur für 30 min konstant gehalten, um die flüchtigen Bestandteile der Lotpaste auszubrennen. Um eine gleichmässige Temperaturverteilung im Ofen sicherzustellen wurde bei 930 °C die Temperatur ebenfalls für 30 min konstant gehalten. Der eigentliche Lötvorgang wurde bei 1050 °C während 20 min ausgeführt. Anschliessend wurde die Temperatur langsam (1-3 °C / min) auf 1000°C gesenkt und für 10 Stunden konstant gehalten um eine gerichtete bzw. einkristalline Erstarrung zu ermöglichen. Die anschliessende Abkühlung auf Raumtemperatur erfolgte rasch (ca. 30 °C / min).

Von Vorteil sind einerseits der einfache Lötprozess, andererseits die relativ niedrige Löttemperatur aufgrund der niedrigen Schmelztemperatur des Lotes 1. Es gibt nur ein geringes Rekristallisationsrisiko im Grundmaterial 10, sowie eine Stabilisierung allfälliger Korngrenzen, falls sich doch Korngrenzen bilden sollten. Das Lot 1 kann je nach Einsatzfall als Pulver, als Suspension oder als Paste aufgebracht werden. Aufgrund der Partikelgrösse im Nanometerbereich können hervorragend kleine kapillarähnliche Risse (≤ 120 µm) repariert werden. Dies passt besonders gut auf einkristalline bzw. gerichtet erstarrte Materialien von Gasturbinenkomponenten, weil dort in typischer Weise Risse mit Breiten von nur wenigen Mikrometern, aber in Abhängigkeit von den Betriebsbedingungen mit einigen Millimetern Länge auftreten.

Werden breitere Risse (z. B. 250 µm Rissbreite) gelötet, so gibt es kaum Schrumpfung, wenn zum Lot 1 Füllerpartikel 4 mit Korngrössen im Mikrometerbereich, welche grösser sind als die Partikelgrössen des zweiten metallischen Pulvers 3, zugegeben werden. Allerdings weist dann das erstarrte Lot 1 nicht zwingend dieselbe einkristalline bzw. gerichtet erstarrte Mikrostruktur wie das umgebende Grundmaterial auf, sondern es wird vorzugsweise polykristallin erstarren.

Mehrfache Lötanwendungen mit entsprechenden mehrfachen Wärmebehandlungen sind mit dem erfindungsgemässen Verfahren vorteilhaft nicht notwendig.

Mit der Erfindung ist es möglich, Reparaturen von Schaufeln thermischer Turbomaschinen auf höher beanspruchte Gebiete auszudehnen mit einem minimalen Rekristallisationsrisiko bzw. mit Stabilisierung allfällig auftretender Korngrenzen.

Durch die Anwesenheit des Lötpulvers im Nanometerkorngrössenbereich und die Schmelzpunkterniedriger wird eine metallische Bindung bei niedrigeren Temperaturen erreicht. Die Diffusion der Schmelzpunkterniedriger von den metallischen Lotpulverpartikeln hält während des Services der Gasturbine an. Da sich die Gebiete mit der beginnenden Rekristallistation an der Oberfläche des Bauteils bzw. an den Rissflanken befinden und von nur kleinen Ausmassen sind, reicht der geringe Diffusionsweg der korngrenzenstabilisierenden Elemente während des Lötzykluses aus, um die Korngrenzen lokal zu stabilisieren, selbst wenn die Diffusion von den grösseren Lotpartikeln noch nicht während der Wärmebehandlung beendet ist.

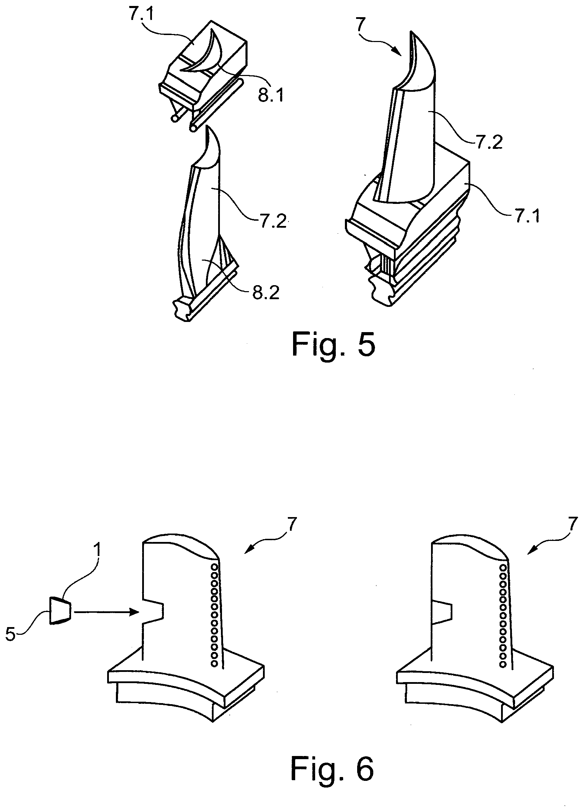

In Fig. 5 ist eine modular gebaute neue Turbinenschaufel gemäss Erfindung als weiteres Ausführungsbeispiel dargestellt. Die fertige Turbinenschaufel ist im rechten Teilbild von Fig. 5 zu sehen. Da es schwierig und teuer ist, grosse einkristalline Bauteile 7 herzustellen, werden auch neue Verfahren zum Herstellen modular gebauter Bauteile 7, insbesondere Gasturbinenschaufeln, welche aus mindestens zwei Bauteilelementen 7.1; 7.2 aus einkristallinen oder gerichtet erstarrten Superlegierungen auf Nickel-, Kobalt- oder Nickel-Kobalt-Basis bestehen, benötigt. Gemäss dem linken Teilbild von Fig. 5 stellt das Bauteil 7.1 den Schaufelfuss dar, in dem eine Öffnung zur Aufnahme des Bauteils 7,2 (= Schaufelblatt mit dem im Bauteil 7.1 fehlenden Fussabschnitt) angeordnet ist. Die Bauteilelemente 7.1; 7.2 weisen einander gegenüberliegende zu verbindende Oberflächen 8.1; 8.2 auf, die fehlerfrei stoffschlüssig miteinander verbunden werden sollen. Dabei wird ein erfindungsgemässes Lot 1 ohne Füllerpartikel 4 verwendet, welches nach einer üblichen vorgängigen mechanischen Vorbereitung der zu verbindenden Oberflächen 8.1; 8.2 vorzugsweise in Form einer Paste, auf mindestens eine der Oberflächen 8.1; 8.2 aufgebracht wird. Das Bauteilelement 7.1 wird anschliessend passgenau auf das Bauteilelement 7.2 geschoben und gegebenenfalls werden beide Bauteilelemente 7.1; 7.2 aneinandergepresst, so dass nur noch eine max. Kapiliarspaltbreite von ca. 120 µm vorhanden ist. Dann wird eine einfache Wärmebehandlung durchgeführt, bei der das Lot 1 aufgeschmolzen und auf RT abgekühlt wird, so dass eine stoffschlüssige Verbindung des Lotes 1 mit den Oberflächen 8.1; 8.2 der Bauteilelemente 7.1; 7.2 erzeugt wird, wobei das erstarrte Lot 1 dieselbe einkristalline bzw. gerichtete Mikrostruktur wie das umgebende Grundmaterial 10 aufweist.

Ebenso lässt sich ein Ersatzstück 5 aus einkristalliner oder gerichtet erstarrter Superlegierung in ein beschädigtes Bauteil 7 aus einkristalliner oder gerichtet erstarrter Superlegierung epitaktisch fügen (siehe Fig. 6). Nach dem Heraustrennen des geschädigten Materials aus dem Bauteil 7 und einer üblichen vorgängigen mechanischen Vorbereitung der zu verbindenden Oberflächen des Bauteils 7 und des Ersatzstücks 5 wird ein erfindungsgemässes Lot 1 ohne Füllerpartikel 4 in Form einer Paste auf mindestens eine der zu verbindenden Oberflächen aufgebracht. Im vorliegenden Ausführungsbeispiel sind das die Oberflächen des Ersatzstücks 5. Das Ersatzstück 5 wird dann mit dem aufgebrachten Lot 1 in das Bauteil 7, hier eine Gasturbinenschaufel, an der Stelle, an der vorgängig das geschädigte Material entfernt wurde, eingesetzt (siehe Pfeil im linken Teilbild von Fig. 6) und gegebenenfalls aneinandergepresst, so dass nur noch eine max. Kapillarspaltbreite von ca. 120 µm vorhanden ist. Mittels einer einfachen mehrstufigen Wärmebehandlung (ohne Zwischenabkühlungen auf RT) wird dann das Lot 1 aufgeschmolzen. Bei der anschliessenden Abkühlung auf RT entsteht eine stoffschlüssig Verbindung des Lotes 1 mit den Oberflächen der Bauteils 7 und des Ersatzstücks 5, wobei das erstarrte Lot 1 dieselbe einkristalline bzw. gerichtete Mikrostruktur wie das umgebende Grundmaterial aufweist. Das reparierte Bauteil 7 ist im rechten Teilbild der Fig. 6 abgebildet.

Auch hier ist es von besonderem Vorteil, dass einerseits nur ein einfacher Lötprozess nötig ist und dass andererseits die Löttemperatur aufgrund der niedrigen Schmelztemperatur des Lotes relativ niedrig ist. Es gibt nur ein geringes Rekristallisationsrisiko. Aufgrund der Partikelgrösse im Nanometerbereich können Artikel mit kleinen Abständen/Lücken (≤ 120 µm) hervorragend und in bester Qualität verbunden werden. Bei zusätzlicher Verwendung von grossen Füllerpartikeln im Lot und/oder bei Verwendung eines hohen Anteils an Füllerpartikeln sind aber auch grössere Abstände zwischen den Bauteilelementen problemlos zu löten, allerdings sind dann keine epitaktischen Mikrostrukturen zu erwarten.

Der generelle Effekt der Erfindung, wie Verringerung der Schmelztemperatur des Lotes und Senkung der Rekristallisationswahrscheinlichkeit, lässt sich auch für andere Lotklassen auf der Basis von Ag, Cu, Al beim Löten von Stählen, Cu- bzw. Al-Legierungen erreichen.

### Bezugszeichenliste

- 1: Lot
- 2: Erster metallischer Pulverbestandteil (Nanometerbereich)
- 3: Zweiter metallischer Pulverbestandteil (Mikrometerbereich)
- 4: Füllerpartikel
- 5: Ersatzstück
- 6: Geschädigtes Gebiet, beispielsweise Riss
- 7: Bauteil
- 7.1; 7.2: Bauteilelement
- 8.1; 8.2: gegenüberliegende zu verbindende Oberflächen
- 9: Rekristallisationsgebiet
- 10: Grundmaterial

## Patentansprüche

1. Lot (1) auf Ni-Basis, Co-Basis oder Ni-Co-Basis zum Hochtemperaturlöten, aufweisend einen ersten metallischen Pulverbestandteil (2) mit Korngrössen im Nanometerbereich und einen zweiten metallischen Pulverbestandteil (3) mit Korngrössen im Mikrometerbereich, wobei die Partikel des zweiten Pulverbestandteils (3) auf ihrer Oberfläche mit Partikeln des ersten Pulverbestandteils (2) dünn beschichtet sind, das Lot (1) zusätzlich korngrenzenstabilisierende Elemente als Legierungselemente des ersten und des zweiten metallischen Pulverbestandteiles (2, 3) aufweist, als korngrenzenstabilisierendes Element mindestens eines aus der Gruppe B, C, Hf, Re, Zr gewählt ist und der erste und/oder zweite metallische Pulverbestandteil (2, 3) des Lotes (1) ein schmelzpunkterniedrigendes Element aufweist, **dadurch gekennzeichnet, dass** das schmelzpunkterniedrigende Element Bor enthält, und wobei der Gehalt an Bor 3 bis 7 Gew.- % beträgt.

2. Lot (1) nach Anspruch 1, **dadurch gekennzeichnet, dass** das Lot (1) zusätzlich Füllerpartikel (4) mit einer Korngrösse im Bereich von 1-30 µm und einem Anteil an der Gesamtmischung von 1 bis 40 Gew.- % aufweist.

3. Lot (1) nach Anspruch 2, **dadurch gekennzeichnet, dass** die Korngrösse der Füllerpartikel (4) 1 bis 15 µm beträgt.

4. Lot (1) nach Anspruch 2, **dadurch gekennzeichnet, dass** der Anteil der Füllerpartikel (4) an der Gesamtmischung 5 bis 20 Gew.- % beträgt.

5. Lot (1) nach Anspruch 2 **dadurch gekennzeichnet, dass** die Füllerpartikel (4) an ihrer Oberfläche mit Partikeln des ersten Pulverbestandteils (2) dünn beschichtet sind.

6. Lot (1) nach Anspruch 1 oder 5, **dadurch gekennzeichnet, dass** die Beschichtung der Partikel des zweiten Pulverbestandteils (3) und die Beschichtung der Füllerpartikel (4) mit den Partikeln des ersten Pulverbestandteils (2) nur eine Lage bis max. 10 Lagen der Partikel des ersten Pulverbestandteils (2) umfasst.

7. Lot (1) nach einem der Ansprüche 1-6, dass es in Form von Pulver, in Form einer Paste oder in Form einer Suspension verwendet wird.

8. Verfahren zum Reparieren von aus einkristallinen oder gerichtet erstarrten Superlegierungen auf Nickel-, Kobalt- oder Nickel-Kobalt-Basis als Grundmaterial (10) bestehenden mit mindestens einem Kapillarriss (6) geschädigten Bauteilen (7), insbesondere Gasturbinenschaufeln, unter Verwendung eines Lotes (1) nach einem der Ansprüche 1, 7, wobei das Lot (1) in bzw. auf das geschädigte Gebiet (6) des Bauteiles (7) ein- bzw. aufgebracht wird, dann mittels einer einfachen Wärmebehandlung des Bauteiles (7) ausgeschmolzen und auf Raumtemperatur abgekühlt wird, so dass eine stoffschlüssige Verbindung des Lotes (1) mit dem umgebenden Grundmaterial (10) des Bauteiles (7) erzeugt wird, wobei das erstarrte Lot (1) dieselbe einkristalline bzw. gerichtet erstarrte Mikrostruktur wie das umgebende Grundmaterial (10) aufweist.

9. Verfahren zum Herstellen oder zur Reparatur modular gebauter Bauteile (7), insbesondere Gasturbinenschaufeln, welche aus mindestens zwei Bauteilelementen (7.1; 7.2) aus einkristallinen oder gerichtet erstarrten Superlegierungen auf Nickel-, Kobalt- oder Nickel-Kobalt-Basis als Grundmaterial (10) bestehen, wobei die Bauteilelemente (7.1; 7.2) einander gegenüberliegende zu verbindende Oberflächen (8.1; 8.2) aufweisen, unter Verwendung eines Lotes (1) nach einem der Ansprüche 1. 7, wobei nach einer üblichen vorgängigen mechanischen Vorbereitung der zu verbindenden Oberflächen (8.1; 8.2) das Lot (1) auf mindestens eine der Oberflächen (8.1; 8.2) aufgebracht wird, anschliessend die Oberflächen (8.1; 8.2) der Bauteilelemente (7.1; 7.2) passgenau aufeinandergefügt und auf Kapillarspaltbreite zusammengepresst werden, und dann mittels einer einfachen Wärmebehandlung das Lot (1) aufgeschmolzen und auf Raumtemperatur abgekühlt wird, so dass eine stoffschlüssige Verbindung des Lotes (1) mit den Oberflächen (8.1; 8.2) der Bauteilelemente (7.1; 7.2) erzeugt wird, wobei das erstarrte Lot (1) dieselbe einkristalline bzw. gerichtet erstarrte Mikrostruktur wie das umgebende Grundmaterial (10) aufweist.

10. Verfahren zur Reparatur eines Bauteils (7), insbesondere Gasturbinenschaufel, welches aus einer einkristallinen oder gerichtet erstarrten Superlegierung auf Nickel-, Kobalt- oder Nickel-Kobalt-Basis als Grundmaterial (10) besteht, durch Einfügen eines Ersatzstückes (5) in das zu reparierende Bauteil (7), wobei das Ersatzstück (5) aus einer einkristallinen oder gerichtet erstarrten Superlegierung auf Nickel-, Kobalt- oder Nickel-Kobalt-Basis als Grundmaterial (10) besteht, unter Verwendung eines Lotes (1) nach einem der Ansprüche 1, 7, wobei nach einer üblichen vorgängigen mechanischen Vorbereitung der zu verbindenden Oberflächen des Bauteils (7) und des Ersatzstücks (5) das Lot (1) in Form einer Paste auf mindestens eine der zu verbindenden Oberflächen aufgebracht wird, das Ersatzstück (5) in das Bauteil (7) eingebracht und auf Kapillarspaltbreite eingepresst wird, und danach das Lot (1) mittels einer einfachen Wärmebehandlung aufgeschmolzen und auf Raumtemperatur abgekühlt wird, so dass eine stoffschlüssige Verbindung des Lotes (1) mit den Oberflächen der Bauteils (7) und des Ersatzstücks (5) erzeugt wird, wobei das erstarrte Lot (1) dieselbe einkristalline bzw. gerichtet erstarrte Mikrostruktur wie das umgebende Grundmaterial aufweist.

## Claims

1. Solder (1) based on Ni, Co or Ni-Co for high-temperature soldering, comprising a first metallic powder component (2) having grain sizes in the nanometre range, and a second metallic powder component (3) having grain sizes in the micrometre range, wherein the surfaces of the particles of the second powder component (3) are thinly coated with particles of the first powder component (2), the solder (1) additionally comprising a grain-boundary-stabilizing element as an alloying element of the first and of the second metallic powder components (2, 3), wherein at least one of the group of B, C, Hf, Re, Zr is selected as the grain-boundary-stabilizing element, and the first and/or second metallic powder component (2, 3) of the solder (1) comprises a melt-point-lowering element, **characterised in that** the melt-point-lowering element contains boron, and wherein the boron content amounts to 3 to 7% by weight.

2. Solder (1) according to claim 1, **characterised in that** the solder (1) also comprises filler particles (4) with a grain size in the range from 1 - 30 µm and a proportion of the total mixture of 1 to 40% by weight.

3. Solder (1) according to claim 2, **characterised in that** the grain size of the filler particles (4) is 1 to 15 µm.

4. Solder (1) according to claim 2, **characterised in that** the proportion of filler particles (4) in the total mixture amounts to 5 to 20% by weight.

5. Solder (1) according to claim 2, **characterised in that** the surfaces of the filler particles (4) are thinly coated with particles of the first powder component (2).

6. Solder (1) according to claim 1 or 5, **characterised in that** the coating of the particles of the second powder component (3) and the coating of the filler particles (4) with the particles of the first powder component (2) contains only one layer up to max. 10 layers of particles of the first powder component (2).

7. Solder (1) according to any of claims 1 to 6, **characterised in that** it is used in the form of powder, a paste or a suspension.

8. Method for repairing components (7), in particular gas turbine blades, which consist of monocrystalline or directionally solidified, nickel-based, cobalt-based, or nickel-cobalt-based super-alloys as a base material (10) and are damaged with at least one capillary crack (6), using a solder (1) according to any of claims 1 - 7, wherein the solder (1) is introduced into or applied to the damaged region (6) of the component (7), then melted by simple heat treatment of the component (7) and cooled to room temperature so that a substance-bonded connection is formed between the solder (1) and the surrounding base material (10) of the component (7), wherein the solidified solder (1) has the same monocrystalline or directionally solidified microstructure as the surrounding base material (10).

9. Method for producing or repairing modular components (7), in particular gas turbine blades, which consist of at least two component elements (7.1; 7.2) made of monocrystalline or directionally solidified, nickel-based, cobalt-based, or nickel-cobalt-based super-alloys as a base material (10), wherein the component elements (7.1; 7.2) have mutually opposing surfaces (8.1; 8.2) to be connected, using a solder (1) according to any of claims 1 - 7, wherein after a conventional prior mechanical preparation of the surfaces (8.1; 8.2) to be connected, the solder (1) is applied to at least one of the surfaces (8.1; 8.2), then the surfaces (8.1; 8.2) of the component elements (7.1; 7.2) are placed one on the other with an exact fit and pressed together to a capillary gap width, then the solder (1) is melted by simple heat treatment and cooled to room temperature, so that a substance-bonded connection is formed between the solder (1) and the surfaces (8.1; 8.2) of the component elements (7.1; 7.2), wherein the solidified solder (1) comprises the same monocrystalline or directionally solidified microstructure as the surrounding base material (10).

10. Method for repairing a component (7), in particular a gas turbine blade, which consists of a monocrystalline or directionally solidified, nickel-based, cobalt-based, or nickel-cobalt-based super-alloy as a base material (10), by insertion of a replacement piece (5) into the component (7) to be repaired, wherein the replacement piece (5) consists of a monocrystalline or directionally solidified, nickel-based, cobalt-based, or nickel-cobalt-based super-alloy as a base material (10), using a solder (1) according to any of claims 1 - 7, wherein after a conventional prior mechanical preparation of the surfaces to be connected of the component (7) and of the replacement piece (5), the solder (1) is applied in the form of a paste onto at least one of the surfaces to be connected, the replacement piece (5) is introduced into the component (7) and pressed in to a capillary gap width, and then the solder (1) is melted by means of a simple heat treatment and cooled to room temperature, so that a substance-bonded connection is formed between the solder (1) and the surfaces of the component (7) and of the replacement piece (5), wherein the solidified solder (1) comprises the same monocrystalline or directionally solidified microstructure as the surrounding base material.

## Revendications

1. Brasage (1) à base de Ni, à base de Co ou à base de Ni-Co pour le brasage à haute température, comprenant un premier composant pulvérulent métallique (2) avec des tailles de grain de l'ordre du nanomètre et un deuxième composant pulvérulent métallique (3) avec des tailles de grain de l'ordre du micromètre, les particules du deuxième composant pulvérulent (3) étant revêtues, sur leur surface, avec une fine couche de particules du premier composant pulvérulent (2), le brasage (1) comprenant en outre des éléments stabilisant les limites des grains en tant qu'éléments d'alliage du premier et du deuxième composant pulvérulent métallique (2, 3), en tant qu'élément stabilisant les limites de grains, au moins un élément du groupe B, C, Hf, Re, Zr est sélectionné et le premier et/ou le deuxième composant pulvérulent métallique (2, 3) du brasage (1) comprenant un élément abaissant le point de fusion, **caractérisé en ce que** l'élément abaissant le point de fusion contient du bore et la teneur en bore est de 3 à 7 % en poids.

2. Brasage (1) selon la revendication 1, **caractérisé en ce que** le brasage (1) comprend en outre des particules de charge (4) avec une taille de grains de l'ordre de 1 à 30 µm et une part du mélange total de 1 à 40 % en poids.

3. Brasage (1) selon la revendication 2, **caractérisé en ce que** la taille des grains des particules de charge (4) est de 1 à 15 µm.

4. Brasage (1) selon la revendication 2, **caractérisé en ce que** la part des particules de charge (4) dans le mélange total est de 5 à 20 % en poids.

5. Brasage (1) selon la revendication 2, **caractérisé en ce que** les particules de charge (4) sont revêtues, sur leur surface, d'une fine couche de particules du premier composant pulvérulent (2).

6. Brasage (1) selon la revendication 1 ou 5, **caractérisé en ce que** le revêtement des particules du deuxième composant pulvérulent (3) et le revêtement des particules de charge (4) avec les particules du premier composant pulvérulent (2) comprend uniquement une couche à 10 couches maximum de particules du premier composant pulvérulent (2).

7. Brasage (1) selon l'une des revendications 1 à 6, **caractérisé en ce qu'**il est utilisé sous la forme d'une poudre, sous la forme d'une pâte ou sous la forme d'une suspension.

8. Procédé de réparation de composants (7) endommagés, constitués de superalliages monocristallins ou à solidification dirigée à base de nickel, de cobalt ou de nickel-cobalt en tant que matériau de base (10) avec au moins une fissure capillaire (6), plus particulièrement des aubes de turbines à gaz, à l'aide d'un brasage (1) selon l'une des revendications 1, 7, le brasage (1) étant intégré ou appliqué dans ou sur la zone endommagée (6) du composant (7), puis fondu au moyen d'un traitement thermique du composant (7) et refroidi à la température ambiante, de façon à obtenir une liaison de matière du brasage (1) avec le matériau de base (10) environnant du composant (7), le brasage (1) solidifié présentant la même microstructure monocristalline ou à solidification dirigée que le matériau de base (10) environnant.

9. Procédé de fabrication ou de réparation de composants (7) conçus de manière modulaire, plus particulièrement des aubes de turbines à gaz, qui sont constitués d'au moins deux éléments de composants (7.1 ; 7.2) en superalliages monocristallins ou à solidification dirigée à base de nickel, de cobalt ou de nickel- cobalt en tant que matériau de base (10), les éléments de composants (7.1 ; 7.2) présentant des surfaces (8.1 ; 8.2) opposées entre elles et à relier, à l'aide d'un brasage (1) selon l'une des revendications 1, 7, moyennant quoi, après unepréparation mécanique préalable habituelle des surfaces (8.1 ; 8.2) à relier, le brasage (1) est appliqué sur au moins une des surfaces (8.1 ; 8.2), puis les surfaces(8.1 ; 8.2) des éléments de composants (7.1 ; 7.2) sont joints entre eux avec un ajustement précis et comprimés ensemble sur la largeur de l'interstice capillaire puis, au moyen d'un simple traitement thermique, le brasage (1) est fondu et refroidià la température ambiante, de façon à obtenir une liaison de matière du brasage (1) avec les surfaces (8.1 ; 8.2) des éléments de composants (7.1 ; 7.2), le brasage (1)solidifié présentant la même microstructure monocristalline ou à solidification dirigée que le matériau de base (10) environnant.

10. Procédé de réparation d'un composant (7), plus particulièrement d'une aube de turbine à gaz, qui est constitué d'un superalliage monocristallin ou à solidification dirigée à base de nickel, de cobalt ou de nickel-cobalt en tant que matériau de base (10), par insertion d'une pièce de remplacement (5) dans le composant à réparer (7), la pièce de remplacement (5) étant constituée d'un superalliage monocristallin ou à solidification dirigée à base de nickel, de cobalt oude nickel-cobalt en tant que matériau de base (10), à l'aide d'un brasage (1) selon l'une des revendications 1, 7, moyennant quoi, après une préparation mécanique préalable habituelle des surfaces à relier du composant (7) et de la pièce de remplacement (5), le brasage (1) est appliqué sous la forme d'une pâte sur au moins une des surfaces à relier, la pièce de remplacement (5) est intégrée dans le composant (7) et comprimée sur la largeur de l'interstice capillaire puis le brasage est fondu au moyen d'un simple traitement thermique et refroidi à la températureambiante, de façon à obtenir une liaison de matière du brasage (1) avec les surfaces du composant (7) et de la pièce de remplacement (5), le brasage (1) solidifié présentant la même microstructure monocristalline ou à solidification dirigée que le matériau de base environnant.
